# EUROPÄISCHE PATENTSCHRIFT

(11) **EP 1 550 982 B1**
(45) Veröffentlichungstag und Bekanntmachung des Hinweises auf die Patenterteilung: **08.08.2012**
(21) Anmeldenummer: 04105377.8
(22) Anmeldetag: 28.10.2004
(51) Int. Cl.: G06T 7/00

(54) **Vorrichtung zur Kalibrierung eines Bildsensorsystems**
Device for calibrating an image sensor system
Dispositif de calibrage d'un système capteur d'images

(30) Priorität: 19.12.2003 DE 10360410
(43) Veröffentlichungstag der Anmeldung: 06.07.2005
(73) Patentinhaber: ROBERT BOSCH GMBH, 70442 Stuttgart (DE)
(72) Erfinder: Herrmann, Roland, 31139 Hildesheim (DE); Abraham, Steffen, 31134 Hildesheim (DE)

(56) Entgegenhaltungen:
- US-A1- 2001 006 554
- POLLEFEYS M ET AL: "A stratified approach to metric self-calibration" COMPUTER VISION AND PATTERN RECOGNITION, 1997. PROCEEDINGS., 1997 IEEE COMPUTER SOCIETY CONFERENCE ON SAN JUAN, PUERTO RICO 17-19 JUNE 1997, LOS ALAMITOS, CA, USA,IEEE COMPUT. SOC, US, 17. Juni 1997 (1997-06-17), Seiten 407-412, XP010237556 ISBN: 978-0-8186-7822-6
- ERNST S ET AL: "Camera calibration for lane and obstacle detection" INTELLIGENT TRANSPORTATION SYSTEMS, 1999. PROCEEDINGS. 1999 IEEE/IEEJ/ JSAI INTERNATIONAL CONFERENCE ON TOKYO, JAPAN 5-8 OCT. 1999, PISCATAWAY, NJ, USA,IEEE, US, 5. Oktober 1999 (1999-10-05), Seiten 356-361, XP010369932 ISBN: 978-0-7803-4975-9
- ZHANG Z: "A Flexible New Technique for Camera Calibration" TECHNICAL REPORT MICROSOFT RESEARCH MSR TR, XX, XX, Nr. MSR-TR-98-71, 2. Dezember 1998 (1998-12-02), Seiten 1-22, XP002372168

## Beschreibung

### Stand der Technik

Die Erfindung betrifft ein Verfahren und eine Vorrichtung zur Kalibrierung wenigstens eines Bildsensorsystems, wobei das Bildsensorsystem in einem Kraftfahrzeug angeordnet ist.

Kraftfahrzeughersteller planen den Einsatz von Kameras in Kraftfahrzeugen, beispielsweise von Rückfahrkameras.

Beispielsweise ist aus der WO 00/74976 A1 ein Rückfahrkamerasystem bekannt, wobei eine Kamera mit einer Weitwinkeloptik ein Videobild von der Situation hinter einem Kraftfahrzeug aufnimmt. Das Videobild wird in einem Display dem Fahrer präsentiert. Zusätzlich wird vorgeschlagen, Hilfslinien in das Videobild einzuzeichnen. Die Hilfslinien dienen zur Visualisierung des Abstandes des Kraftfahrzeuges zu Hindernissen oder Objekten. Ferner zeigen die Hilfslinien in Abhängigkeit vom Lenkradeinschlag einen Fahrschlauch in dem sich das Kraftfahrzeug bei einer Rückwärtsbewegung mit konstantem Lenkwinkeleinschlag bewegen würde. Dieser Vorschlag hat den Vorteil, dass dem Fahrer das Einparken erleichtert wird.

Die US 2001/0006554 A1 vom 5. Juli 2001 offenbart eine Vorrichtung zur Kalibrierung einer Kamera eines Kraftfahrzeuges, wobei zur Kalibrierung ein zweidimensionales Kalibriermerkmal auf dem Boden angebracht ist. Nachdem das Kraftfahrzeug in einer vorbestimmten Position abgestellt ist, wird die Kamera mittels des Kalibriermerkmals kalibriert.

Die US 2001/0006554 A1 beschreibt eine Kalibrationsvorrichtung zur Kalibrierung einer Fahrzeugkamera. Hierbei wird ein Kalibrationsindikator verwendet, der zweidimensional auf einer Fahrbahn abgebildet ist. Das erfasste Bild des Kalibrationsindikators wird auf einem Bildschrift abgebildet, wobei eine Überlagerung mit einem Fenster auf dem Bildschrift durchgeführt werden kann, um durch eine derartige Manipulation eine Kalibrierung zu erreichen.

In Pollefeys M et al; "A stratified approach to metric self-calibration", Computer Vision and Pattern recognition, 1997. Proceedings., 1997 IEEE computer Society Conference on san Juan, Puerto Rico 17-19 June 1997, Los Alamitos, CA, USA IEEE Comput. SOC, US wird eine Kamerakalibrierung beschrieben, bei der eine Bildfolge aus mehreren Bildern in unterschiedlichen Positionen zur Kalibrierung der Kamera und Bestimmung intrinsischer Kameraparameter herangezogen wird.

Ernst S et al: "Camera calibration for lane and obstacle detection" Intelligent Transportation Systems, 1999. Proceedings. 1999 IEEE/IEEJ/JSAI International Conference on Tokyo, Japan beschreibt eine weitere Kamerakalibrierung.

ZHANG Z: "A Flexible New Technique for Camera Calibration" Technical Report Microsoft Research MSR TR, XX, XX, Nr. MSR-TR-98-71 beschreibt ein weiteres Verfahren zur Kamerakalibrierung.

### Vorteile der Erfindung

Das nachfolgend beschriebene Verfahren zur Kalibrierung wenigstens eines Bildsensorsystems mit den Merkmalen des unabhängigen Patentanspruchs 1 hat den Vorteil, dass eine exakte Positionierung des Kraftfahrzeuges bezüglich des Kalibrierobjektes nicht erforderlich ist. Für eine exakte Positionierung des Kraftfahrzeuges bezüglich eines Kalibrierobjektes sind entweder teure Achsmessstände oder Rollenprüfstände oder Markierungen auf der Fahrbahn für die Positionierung erforderlich, um die Lage der Hinterachse festzulegen, oder die Lage des Kalibrierobjektes wird über zusätzliche technische Ausrüstungen in der Fertigung oder in Werkstätten festgelegt. Dies ist mit hohen Kosten verbunden, da beispielsweise die Nutzung von Prüfständen insbesondere in der Fertigung hohe Kosten verursacht. Ferner sind Prüfstände nicht in allen Werkstätten vorhanden. Die exakte Positionierung des Kraftfahrzeuges mittels Markierungen zur Positionierung auf der Fahrbahn ist schwierig, da dies vom Geschick des Fahrers abhängt. Auch die Verwendung von zusätzlicher technischer Ausrüstung verursacht hohe Kosten. Zusammenfassend hat die nachfolgend beschriebene Vorrichtung den Vorteil einer exakten, einfachen und zugleich kostengünstigen Kalibrierung eines Bildsensorsystems in einem Kraftfahrzeug, insbesondere in einem Rückfahrkamerasystem.

Besonders vorteilhaft ist, dass das Bildsensorsystem zumindest einen Teil des rückwärtigen Fahrraumes des Kraftfahrzeuges erfasst, insbesondere, dass das Bildsensorsystem Bestandteil eines Rückfahrkamerasystems ist.

Vorteilhaft ist, dass das Kalibrierobjekt wenigstens eine zweidimensionale Markierung auf der Fahrbahnebene umfasst, wobei vorzugsweise die wenigstens eine Markierung in Form und Größe wenigstens eine Parkplatzmarkierung für Kraftfahrzeuge bildet. Die zweidimensionale Markierung ist beispielsweise eine Fahrbahnmarkierung, beispielsweise ein Pfeil, und/oder eine Parkplatzmarkierung. Ein solches Fahrbahntestfeld ist von einfachstem Aufbau und daher kostengünstig. Das ebene Fahrbahntestfeld nimmt in der Fertigung und/oder einer Werkstatt wenig Platz in Anspruch, da es überfahrbar und begehbar ist. Vorteilhaft ist hierbei, wenn die zweidimensionale Markierung als dünne Platte und/oder aufklebbare Folie und/oder als Farbauftrag realisiert ist, da eine derartige Markierung kostengünstig, alterungsbeständig und widerstandsfähig ist. Besonders vorteilhaft ist der Einsatz von Parkplatzmarkierungen (Parklückenmarkierungen), da diese im urbanen Umfeld vorhanden sind und hierdurch eine Unabhängigkeit von Werkstätten und speziellen Ausrüstungen erreicht wird.

Ein weiterer Vorteil ist, dass erfindungsgemäß mittels Vorwärtsfahrt und/oder Rückwärtsfahrt des Kraftfahrzeuges von der ersten Position des Bildsensorsystems die zweite Position des Bildsensorsystems eingenommen wird. Die Konfiguration der Vorrichtung in der Vorwärtsfahrt hat den Vorteil, dass die Vorrichtung das Bildsensorsystem in der Mehrzahl der Betriebszeit kalibrieren kann, da die Vorwärtsfahrt die häufigste Betriebsart des Kraftfahrzeuges ist.

Vorteilhaft ist, dass der Lenkeinschlag des Kraftfahrzeuges zwischen dem rechten halben Lenkeinschlag und dem rechten maximalen Lenkeinschlag und/oder der Lenkeinschlag des Kraftfahrzeuges zwischen dem linken halben Lenkeinschlag und dem linken maximalen Lenkeinschlag ist. In einer weiteren Variante ist der Lenkeinschlag des Kraftfahrzeuges maximal. Hierdurch wird die Genauigkeit der Kalibrierung erhöht. Gleichzeitig geht damit in vorteilhafter Weise eine Erhöhung der Genauigkeit der Darstellung des Fahrschlauches einher.

Erfindungsgemäß wird das Bildsensorsystem in Abhängigkeit von Bildsignalen des Kalibrierobjektes kalibriert, wobei die Vorrichtung wenigstens ein geometrisches Merkmal des Kalibrierobjektes abgelegt hat. Ein geometrisches Merkmal ist dabei beispielsweise die Länge und/oder Breite einer Fahrbahnmarkierung und/oder einer Parkplatzmarkierung. Eine derartige Vorrichtung hat den Vorteil, dass die Genauigkeit der Kalibrierung erhöht wird. Besonders vorteilhaft ist eine derartige Kalibrierung und damit eine derartige Vorrichtung in der Kraftfahrzeugfertigung und/oder in Kraftfahrzeugwerkstätten. Ferner ist es vorteilhaft, bei nicht bekannten geometrischen Merkmalen einer Fahrbahnmarkierung, beispielsweise der 3-dimensionalen Größe, die Bildsignale des Bildsensorsystems mit Signalen von Raddrehzahlsensoren und/oder Lenkwinkelsensoren gemeinsam auszuwerten, da dies die Bestimmung der Einbauparameter des Bildsensorsystems erlaubt. Dies hat den Vorteil, dass eine beliebige Parkplatzmarkierung und/oder Fahrbahnmarkierung des öffentlichen Verkehrsraumes zur Bestimmung der Einbauparameter einsetzbar ist.

Vorteilhaft ist, dass die Vorrichtung derart konfiguriert ist, dass die Vorrichtung das Bildsensorsystem während der bestimmungsgemäßen Verwendung des Bildsensorsystems initial, also erstmalig oder neu, kalibriert und/oder eine Dekalibrierung überwacht und/oder nachkalibriert. Dies ermöglicht eine fortwährende Überwachung der Funktionsfähigkeit des Bildsensorsystems.

Besonders vorteilhaft ist, dass die Vorrichtung wenigstens eine Eingabeeinheit umfasst, wobei die Eingabeeinheit derart ausgestaltet ist, dass eine Kennzeichnung wenigstens eines Teils des Kalibrierobjektes in den Bildsignalen des Bildsensorsystems durchführbar ist. Dies ermöglicht die manuelle Positionierung von Hilfslinien im angezeigten Videobild (Displaybild) beispielsweise mittels Cursor-Tasten, so dass die Hilfslinien mit dem erfassten Videobild zur Deckung kommen. Diese manuell von einem Bediener durchgeführte Messung ist einfach und robust. Alternativ oder zusätzlich wird eine automatische Auswertung durchgeführt. Obwohl hierzu aufwendige Algorithmen zur Bildverarbeitung erforderlich sind und dies zu einer höheren Rechenleistung im Steuergerät führt, bietet die automatische Auswertung den Vorteil, dass keine Bedienereingaben erforderlich sind.

Weitere Vorteile ergeben sich aus der nachfolgenden Beschreibung von Ausführungsbeispielen mit Bezug auf die Figuren und aus den abhängigen Patentansprüchen.

### Zeichnung

Die Erfindung wird nachstehend anhand der in der Zeichnung dargestellten Ausführungsformen näher erläutert.

Es zeigen:
- Figur 1 eine Übersichtszeichnung des bevorzugten Ausführungsbeispiels,
- Figur 2 eine Aufsicht des bewegten Kraftfahrzeuges des bevorzugten Ausführungsbeispiels,
- Figur 3 eine Eingabeeinheit der Vorrichtung zur Kalibrierung eines Bildsensorsystems des bevorzugten Ausführungsbeispiels.

### Beschreibung von Ausführungsbeispielen

Nachfolgend wird eine Vorrichtung zur Kalibrierung wenigstens eines Bildsensorsystems beschrieben. Die Vorrichtung ist derart konfiguriert, dass die Vorrichtung das in einem Kraftfahrzeug angeordnete Bildsensorsystem in Abhängigkeit von Bildsignalen des Bildsensorsystems von einem in einer Fahrbahnebene befindlichen Kalibrierobjekt kalibriert. Ferner ist die Vorrichtung derart konfiguriert, dass die Vorrichtung das Bildsensorsystem in Abhängigkeit von einem ersten Bildsignal und wenigstens einem zweiten Bildsignal kalibriert, wobei das erste Bildsignal an einer ersten Position des Bildsensorsystems bezüglich des Kalibrierobjektes erzeugt wird und das zweite Bildsignal an wenigstens einer zweiten Position erzeugt wird, wobei die zweite Position von der ersten Position verschieden ist.

Das System der Rückfahrkamera beinhaltet wenigstens ein Bildsensorsystem, das im Kraftfahrzeug angeordnet ist und zumindest einen Teil des rückwärtigen Fahrraumes des Kraftfahrzeuges erfasst, und eine Anzeigeeinheit zur Bildwiedergabe des erfassten Fahrraumes. Die geometrisch exakte Einblendung von Hilfslinien in das Videobild erfordert eine Kalibrierung des Bildsensorsystems. Diese Kalibrierung umfasst die Bestimmung von intrinsischen Kalibrierparametem, insbesondere die Beschreibung der Abbildung in dem Bildsensorsystem, und/oder von extrinsischen Kalibrierparametem (Parameter der Einbaukalibrierung, Einbauparameter), welche die Lage des Bildsensorsystems bezüglich des Kraftfahrzeuges bzw. der Fahrbahnebene beschreiben. Für die Darstellung eines Fahrschlauches ist weiterhin eine Auswertung der Lenkwinkelsignale und deren Umrechnung in Bewegungstrajektorien des Kraftfahrzeuges erforderlich. Die Einblendung von Linien im Videobild, welche die Entfernung zu Hindernissen visualisieren, nachfolgend als Entfernungslinien bezeichnet, ermöglichen dem Fahrer die Entfernung zu Hindernissen hinter dem Kraftfahrzeug abzuschätzen. Die Parameter der Einbaukalibrierung des Systems Rückfahrkamera, die nach Montage des Bildsensorsystems im Kraftfahrzeug zum Teil für jedes Kraftfahrzeug individuell ermittelt werden müssen, sind:
- Der Nickwinkel und/oder der Gierwinkel und/oder der Wankwinkel zwischen Bildsensorsystem und Fahrbahn und/oder zwischen Bildsensorsystem und Fahrachse (Einbauwinkel), und/oder
- Die Höhe des Bildsensorsystems über der Fahrbahnebene, und/oder
- Der Abstand des Bildsensorsystems von der Hinterachse, und/oder
- die Querlage des Bildsensorsystems bezüglich der Kraftfahrzeuglängsebene.

Die letzten beiden oder die letzten drei Kalibrierparameter werden vorzugsweise aus Konstruktionsdaten des Kraftfahrzeuges übernommen. Die exakte Einhaltung der Einbauwinkel ist in der Fertigung oder Reparatur in der notwendigen Genauigkeit schwer erreichbar. Daher wird nachfolgend beschrieben, die Einbauwinkel nach Montage des Bildsensorsystems zu ermitteln. Ferner ändert sich die Höhe des Bildsensorsystems über der Fahrbahn und/oder der Nickwinkel in Abhängigkeit des Beladungszustandes des Kraftfahrzeuges. Nachfolgend werden die Bestimmung von Einbauparametern des Bildsensorsystems im Kraftfahrzeug und/oder die Bestimmung von Parametern zur geometrisch exakten Darstellung des präzidierten Fahrschlauches in der Anzeigeeinheit (Display) und/oder die Bestimmung von intrinsischen Kalibrierparametem des Bildsensorsystems beschrieben. Diese Parameter, insbesondere die Einbauparameter des Bildsensorsystems, und/oder die Lage der Fahrbahnebene werden aus der zwei oder mehrfachen Abbildung eines ebenen Fahrbahntestfeldes bestimmt, wobei das Kraftfahrzeug zwischen den Aufnahmezeitpunkten verfahren wird. Als Testfelder auf der Fahrbahn oder dem Boden einer Werkstatt oder der Fertigungsstätte werden vorzugsweise Parkplatzmarkierungen und/oder Fahrbahnmarkierungen verwendet. Zusätzlich oder alternativ werden zweidimensionale Markierungen auf der Fahrbahnebene, beispielsweise linienförmige und/oder punktförmige Muster, verwendet.

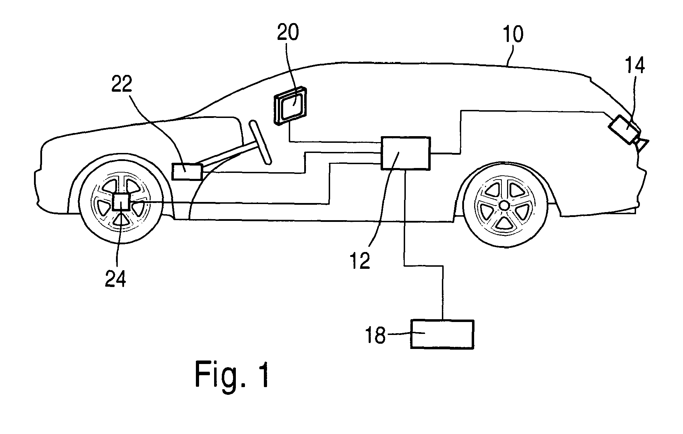

Figur 1 zeigt eine Übersichtszeichnung der Vorrichtung zur Kalibrierung eines Bildsensorsystems 14 in Verbindung mit einem Kraftfahrzeug 10 des bevorzugten Ausführungsbeispiels, bestehend aus einem Steuergerät 12 und einem Bildsensorsystem 14. Ferner zeigt Figur 1 eine Bedieneinheit 18, eine Anzeigeeinheit 20 zur Darstellung des Videobildes, einen Lenkwinkelsensor 22 und einen Radwinkelsensor 24. Die Signale des Lenkwinkelsensors 22 und/oder die Signale des Radwinkelsensors 24 werden zur Bestimmung des Fahrschlauches bei Rückwärtsfahrt eingesetzt. Das Bildsensorsystem 14, die Bedieneinheit 18, die Anzeigeeinheit 20, der Lenkwinkelsensor 22 und der Radwinkelsensor 24 sind über Signalleitungen mit dem Steuergerät 12 verbunden. Die Übertragung der Signale über die Signalleitungen erfolgt elektrisch und/oder optisch und/oder per Funk. Alternativ oder zusätzlich sind die Signalleitungen durch einen Bus, beispielsweise dem CAN-Bus, realisiert. Das Bildsensorsystem 14 ist im bevorzugten Ausführungsbeispiel eine CMOS-Kamera mit Weitwinkeloptik. Das Bildsensorsystem ist im bevorzugten Ausführungsbeispiel im rückwärtigen Bereich des Kraftfahrzeuges derart angeordnet, dass das Bildsensorsystem zumindest einen Teil des rückwärtigen Fahrraumes des Kraftfahrzeuges erfasst.

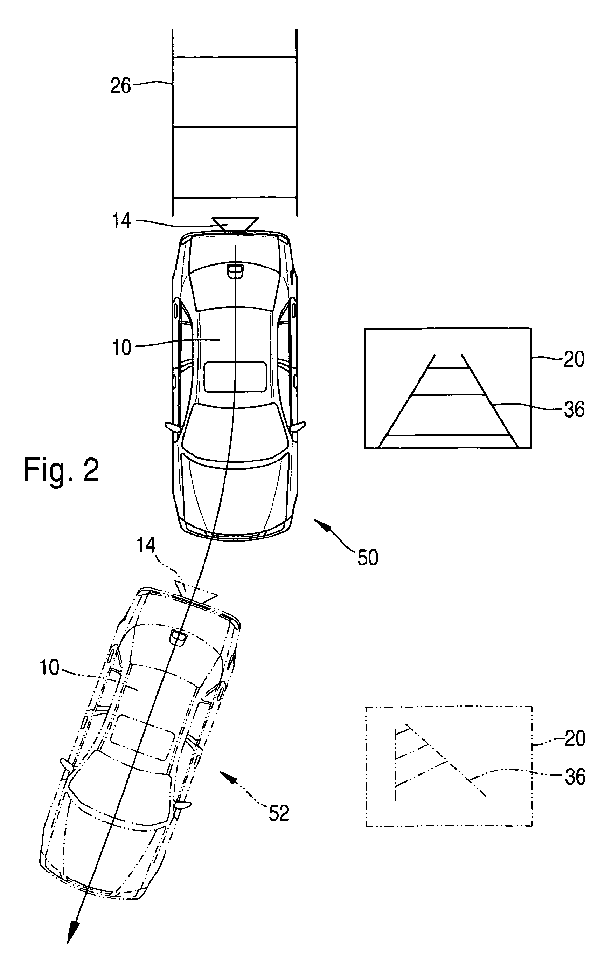

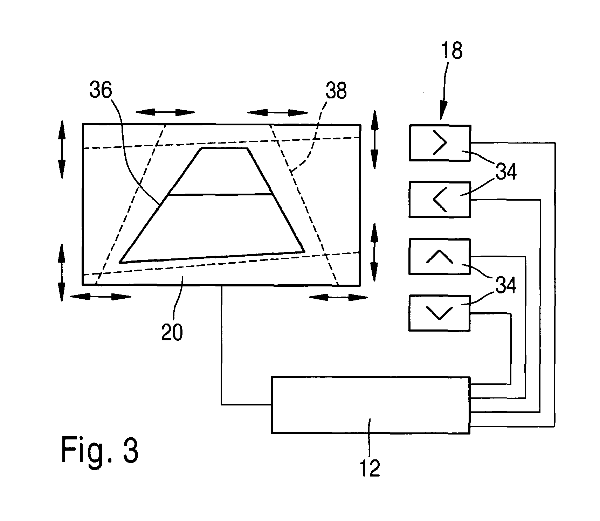

Figur 2 zeigt eine Aufsicht des bewegten Kraftfahrzeuges 10 des bevorzugten Ausführungsbeispiels zur Illustrierung der Kalibrierung des Bildsensorsystems 14. Ferner zeigt Figur 2 ein ebenes Fahrbahntestfeld 26 auf der Fahrbahn bzw. dem Boden einer Werkstatt. Das Kraftfahrzeug 10 wird an einer ersten Position 50 derart positioniert, dass das Fahrbahntestfeld 26 in der Anzeigeeinheit 20 als Bild 36 des Fahrbahntestfeldes 26 sichtbar ist. Mittels der in Figur 3 dargestellten Eingabeeinheit wird die Lage des Bildes 36 des Fahrbahntestfeldes 26 interaktiv in der ersten Position 50 als Bildmessungen m1 bestimmt, indem die Hilfslinien mit dem Fahrbahntestfeld zur Deckung gebracht werden. Anschließend wird das Kraftfahrzeug 10 durch Vorwärtsfahrt in die zweite Position 52 bewegt. Im bevorzugten Ausführungsbeispiel werden die Signale des Lenkwinkelsensors und/oder die Signale des Raddrehzahlsensors erfasst und aufgezeichnet und zur Kalibrierung des Bildsensorsystems eingesetzt. Mittels der in Figur 3 dargestellten Eingabeeinheit wird die Lage des Bildes 36 des Fahrbahntestfeldes 26 interaktiv in der zweiten Position 52 als Bildmessungen m2 bestimmt. Aus den Bildmessungen m1 und m2 und/oder den Daten zur Fahrzeuggeometrie und/oder den Daten zur Fahrzeugbewegung, wie die Signale des Lenkwinkelsensors und/oder den Signalen des Raddrehzahlsensors, und/oder einem Bewegungsmodell des Kraftfahrzeuges 10 werden die gesuchten Einbauparameter des Bildsensorsystems im Steuergerät berechnet und zur Kalibrierung des Bildsensorsystems verwendet. Alternativ oder zusätzlich werden die Einbauparameter für die Darstellung von Abstandslinien und/oder eines Fahrschlauches in Anzeigeeinheit (Display) verwendet. Im bevorzugten Ausführungsbeispiel hat die Vorrichtung zur Kalibrierung wenigstens eines Bildsensorsystems die geometrische Größe des Fahrbahntestfeldes abgelegt. Basierend auf den Bilddaten an zwei unterschiedlichen Positionen werden die Einbauwinkel, Nickwinkel und/oder Gierwinkel und/oder Wankwinkel, bestimmt. Bei vorhanden Signalen aus den Raddrehzahlsensoren und/oder Signalen aus den Lenkwinkelsensoren wird zusätzlich die Einbauhöhe des Bildsensorsystems bestimmt. Alternativ oder zusätzlich wird in einer Variante wenigstens ein intrinsischer Kalibrierparameter ermittelt.

Figur 3 zeigt eine Eingabeeinheit 18 der Vorrichtung zur Kalibrierung eines Bildsensorsystems des bevorzugten Ausführungsbeispiels, bestehend aus vier Cursor-Tasten 34. Die Cursor-Tasten 34 der Eingabeeinheit 18 sind über Signalleitungen mit dem Steuergerät 12 des Kraftfahrzeuges verbunden. Zwei der Cursor-Tasten 34 dienen zur horizontalen Bewegung der Hilfslinien 38, während zwei weitere Cursor-Tasten 34 zur vertikalen Bewegung der Hilfslinien 38 dienen. Ferner ist die Anzeigeeinheit 20 über Signalleitungen mit dem Steuergerät 12 verbunden. Die Übertragung der Signale über die Signalleitungen erfolgt elektrisch und/oder optisch und/oder per Funk. Alternativ oder zusätzlich sind die Signalleitungen als Bus, beispielsweise einem CAN-Bus, realisiert. Im bevorzugten Ausführungsbeispiel wird die Bedieneinheit 18 lediglich bei der Fertigung und/oder Reparatur an die Steuereinheit 12 angeschlossen. Die Steuereinheit 12 ist im Kraftfahrzeug installiert und ist im Betrieb des Kraftfahrzeuges Bestandteil der Rückfahrkamerafunktion. Entsprechendes gilt für die Anzeigeeinheit 20, die im regulären Betrieb ebenfalls Bestandteil der Rückfahrkamerafunktion ist. In einer Variante des bevorzugten Ausführungsbeispiels beinhaltet die Eingabeeinheit 18 neben den Cursor-Tasten 34 eine separate Anzeigeeinheit und/oder eine separate Steuereinheit. Ferner zeigt Figur 4 ein Videobild auf der Anzeigeeinheit 20 umfassend ein Bild 36 des Fahrbahntestfeldes 26 und Hilfslinien 38.

In einer Variante des bevorzugten Ausführungsbeispiels wird die Lage des Fahrbahntestfeldes an der ersten Position und/oder an der wenigstens zweiten Position im Bild automatisch durch das Steuergerät durch Bildverarbeitungsmethoden, wie Mustererkennung, durchgeführt.

In einer weiteren Variante des bevorzugten Ausführungsbeispiels werden Fahrbahntestfelder verwendet, deren geometrischen Größe unbekannt ist. Eine derartig gestaltete Vorrichtung ermöglicht die Kalibrierung des Bildsensorsystems an beliebigen im öffentlichen Straßenraum vorliegende Parkplatzmarkierungen und/oder Fahrbahnmarkierungen. Alternativ oder zusätzlich wird eine automatische Nachkalibrierung und/oder eine Überwachung der Dekalibrierung zumindest eines Teils der Einbauparameter während der bestimmungsgemäßen Verwendung des Bildsensorssystems durchgeführt. Die Vorrichtung ist entsprechend konfiguriert.

Eine weitere Variante des bevorzugten Ausführungsbeispiels sieht vor, dass die Vorrichtung derart konfiguriert ist, dass die Vorrichtung das Bildsensorsystem während der bestimmungsgemäßen Verwendung des Bildsensorsystems in Abhängigkeit des Beladungszustandes des Kraftfahrzeuges initial kalibriert und/oder eine Dekalibrierung überwacht und/oder nachkalibriert. Damit wird im Betrieb des Bildsensorsystems der Einfluss verschiedener Beladungszustände des Kraftfahrzeuges kompensiert.

In einer weiteren Variante des bevorzugten Ausführungsbeispiels ist die Vorrichtung derart konfiguriert, dass die Vorrichtung das Bildsensorsystem während der bestimmungsgemäßen Verwendung des Bildsensorsystems in Abhängigkeit einer Leuchtweitenregulierung von Scheinwerfern des Kraftfahrzeuges kalibriert und/oder nachkalibriert.

Bei einer Variante des bevorzugten Ausführungsbeispiels ist bei der Bewegung des Kraftfahrzeuges zwischen der ersten Position und der wenigstens einen zweiten Position der Lenkeinschlag des Kraftfahrzeuges zwischen dem rechten halben Lenkeinschlag und dem rechten maximalen Lenkeinschlag und/oder der Lenkeinschlag des Kraftfahrzeuges zwischen dem linken halben Lenkeinschlag und dem linken maximalen Lenkeinschlag. In einer weiteren Variante ist der Lenkeinschlag des Kraftfahrzeuges maximal.

In einer weiteren Variante des bevorzugten Ausführungsbeispiels ist das Bildsensorsystem alternativ oder zusätzlich eine CCD-Kamera. Eine weitere Variante sieht vor, das Bildsensorsystem aus wenigstens zwei CCD-Kameras und/oder CMOS-Kameras zu bilden, insbesondere ist das Bildsensorsystem eine Stereokamera mit zwei Kameras, die im wesentlichen dieselbe Szene aufnehmen.

## Patentansprüche

1. Verfahren zur Kalibrierung wenigstens eines Bildsensorsystems,
wobei das in einem Kraftfahrzeug angeordnete Bildsensorsystem in Abhängigkeit von Bildsignalen des Bildsensorsystems von einem in einer Fahrbahnebene befindlichen Kalibrierobjekt kalibriert wird,
**dadurch gekennzeichnet, dass**
das Bildsensorsystem in Abhängigkeit von einem ersten Bildsignal und wenigstens einem zweiten Bildsignal kalibriert wird,
wobei das erste Bildsignal an einer ersten Position des Bildsensorsystems bezüglich des Kalibrierobjektes erzeugt wird und das zweite Bildsignal an wenigstens einer zweiten Position erzeugt wird,
wobei die zweite Position von der ersten Position verschieden ist,
wobei mittels Vorwärtsfahrt oder Rückwärtsfahrt des Kraftfahrzeuges von der ersten Position des Bildsensorsystems die zweite Position des Bildsensorsystems eingenommen wird, und
wobei aus den Bildsignalen und Daten zur Fahrzeugbewegung zwischen der ersten Position und zweiten Position die Einbauparameter des Bildsensorsystems berechnet und zur Kalibrierung verwendet werden, wobei die Daten zur Fahrzeugbewegung Signale eines Lenkwinkelsensors umfassen.

2. Verfahren nach Anspruch 1, **dadurch gekennzeichnet, dass** das Bildsensorsystem zumindest einen Teil des rückwärtigen Fahrraumes des Kraftfahrzeuges erfasst.

3. Verfahren nach Anspruch 1 oder 2, **dadurch gekennzeichnet, dass** das Kalibrierobjekt wenigstens eine zweidimensionale Markierung auf der Fahrbahnebene umfasst, wobei vorzugsweise die wenigstens eine Markierung in Form und Größe wenigstens eine Parkplatzmarkierung für Kraftfahrzeuge bildet.

4. Verfahren nach einem der vorherigen Ansprüche, **dadurch gekennzeichnet, dass** der Lenkeinschlag des Kraftfahrzeuges bei der Fahrzeugbewegung zwischen der ersten und zweiten Position zwischen dem rechten halben Lenkeinschlag und dem rechten maximalen Lenkeinschlag und/oder dass der Lenkeinschlag des Kraftfahrzeuges zwischen dem linken halben Lenkeinschlag und dem linken maximalen Lenkeinschlag ist, insbesondere dass der Lenkeinschlag des Kraftfahrzeuges maximal ist.

5. Vorrichtung zur Durchführung eines Verfahrens nach einem der vorherigen Ansprüche, mit einem Steuergerät (12), einem Bildsensorsystem (14) und einem Lenkwinkelsensor (22), **dadurch gekennzeichnet, dass** die Vorrichtung derart konfiguriert ist, dass sie das Bildsensorsystem (14) in Abhängigkeit von Bildsignalen des Kalibrierobjektes (26) kalibriert, wobei die Vorrichtung wenigstens ein geometrisches Merkmal des Kalibrierobjektes (26) abgelegt hat.

6. Vorrichtung nach Anspruch 5, **dadurch gekennzeichnet, dass** die Vorrichtung derart konfiguriert ist, dass die Vorrichtung das Bildsensorsystem (14) während der bestimmungsgemäßen Verwendung des Bildsensorsystems (14) initial kalibriert und/oder eine Dekalibrierung überwacht und/oder nachkalibriert.

7. Vorrichtung nach Anspruch 5 oder 6, **dadurch gekennzeichnet, dass** die Vorrichtung derart konfiguriert ist, dass die Vorrichtung das Bildsensorsystem (14) während der bestimmungsgemäßen Verwendung des Bildsensorsystems (14) in Abhängigkeit des Beladungszustandes des Kraftfahrzeuges initial kalibriert und/oder eine Dekalibrierung überwacht und/oder nachkalibriert.

8. Vorrichtung nach einem der Ansprüche 5 bis 7, **dadurch gekennzeichnet, dass** die Vorrichtung derart konfiguriert ist, dass die Vorrichtung das Bildsensorsystem (14) während der bestimmungsgemäßen Verwendung des Bildsensorsystems (14) in Abhängigkeit einer Leuchtweitenregulierung von Scheinwerfern des Kraftfahrzeuges kalibriert und/oder nachkalibriert.

9. Vorrichtung nach einem der Ansprüche 5 bis 8, **dadurch gekennzeichnet, dass** die Vorrichtung wenigstens eine Eingabeeinheit (18) umfasst, wobei die Eingabeeinheit (18) derart ausgestaltet ist, dass eine Kennzeichnung wenigstens eines Teils des Kalibrierobjektes (26) in den Bildsignalen des Bildsensorsystems (14) durchführbar ist.

10. Fahrzeug mit einer Vorrichtung nach einem der Ansprüche 5 bis 9.

## Claims

1. Method for calibrating at least one image sensor system, the image sensor system arranged in a motor vehicle being calibrated as a function of image signals of the image sensor system by a calibration object situated in a carriageway plane, **characterized in that**
the image sensor system is calibrated as a function of a first image signal and at least a second image signal,
the first image signal being generated at a first position of the image sensor system with reference to the calibration object, and the second image signal being generated at at least a second position,
the second position being different from the first position,
the second position of the image sensor system being occupied by means of driving the motor vehicle forwards or backwards from the first position of the image sensor system, and
the installation parameters of the image sensor system being calculated from the image signals and data relating to vehicle movement between the first position and second position and being used for calibration, the data relating to vehicle movement comprising signals of a steering-angle sensor.

2. Method according to Claim 1, **characterized in that** the image sensor system comprises at least a part of the rearward driving space of the motor vehicle.

3. Method according to Claim 1 or 2, **characterized in that** the calibration object comprises at least one two-dimensional marking on the carriageway plane, the at least one marking preferably forming in shape and size at least one marked parking place for motor vehicles.

4. Method according to one of the preceding claims, **characterized in that** during the vehicle movement between the first and second positions the steering lock of the motor vehicle is between the right-hand half steering lock and the right-hand maximum steering lock, and/or **in that** the steering lock of the motor vehicle is between the left-hand half steering lock and the left-hand maximum steering lock, in particular **in that** the steering lock of the motor vehicle is at maximum.

5. Device for carrying out a method according to one of the preceding claims and having a controller (12), an image sensor system (14) and a steering-angle sensor (22), **characterized in that** the device is configured in such a way that it calibrates the image sensor system (14) as a function of image signals of the calibration object (26), the device having stored at least one geometrical feature of the calibration object (26).

6. Device according to Claim 5, **characterized in that** the device is configured in such a way that the device initially calibrates the image sensor system (14) during the normal use of the image sensor system (14), and/or monitors a decalibration, and/or recalibrates.

7. Device according to Claim 5 or 6, **characterized in that** the device is configured in such a way that the device initially calibrates the image sensor system (14) during normal use of the image sensor system (14) as a function of the loading state of the motor vehicle, and/or monitors a decalibration, and/or recalibrates.

8. Device according to one of Claims 5 to 7, **characterized in that** the device is configured in such a way that the device calibrates the image sensor system (14) during normal use of the image sensor system (14) as a function of a luminous range control of headlamps of the motor vehicle, and/or recalibrates.

9. Device according to one of Claims 5 to 8, **characterized in that** the device comprises at least one input unit (18), the input unit (18) being configured in such a way that it is possible to identify at least a part of the calibration object (26) in the image signals of the image sensor system (14).

10. Vehicle having a device according to one of Claims 5 to 9.

## Revendications

1. Procédé d'étalonnage d'au moins un système capteur d'images, le système capteur d'images disposé dans un véhicule automobile étant étalonné en fonction de signaux d'image du système capteur d'images d'un objet d'étalonnage qui se trouve dans un plan de la chaussée,
**caractérisé en ce que**
le système capteur d'images est étalonné en fonction d'un premier signal d'image et d'au moins un deuxième signal d'image,
le premier signal d'image étant généré en une première position du système capteur d'images par rapport à l'objet d'étalonnage et le deuxième signal d'image étant généré en au moins une deuxième position,
la deuxième position étant différente de la première position,
la deuxième position du système capteur d'images étant adoptée par un déplacement en marche avant ou un déplacement en marche arrière du véhicule automobile depuis la première position du système capteur d'images, et
les paramètres de montage du système capteur d'images étant calculés à partir des signaux d'image et des données relatives au déplacement du véhicule entre la première position et la deuxième position et utilisés pour l'étalonnage, les données relatives au déplacement du véhicule comprenant les signaux d'un détecteur d'angle de direction.

2. Procédé selon la revendication 1, **caractérisé en ce que** le système capteur d'images détecte au moins une partie de l'espace arrière du véhicule automobile.

3. Procédé selon la revendication 1 ou 2, **caractérisé en ce que** l'objet d'étalonnage comprend au moins un marquage bidimensionnel sur le plan de la chaussée, de préférence l'au moins un marquage formant, par sa forme et sa taille, au moins un marquage d'emplacement de stationnement pour véhicules automobiles.

4. Procédé selon l'une des revendications précédentes, **caractérisé en ce que** le braquage de la direction du véhicule automobile lors du déplacement du véhicule entre la première et la deuxième position se trouve entre le demi-braquage de direction vers la droite et le braquage maximum de la direction vers la droite et/ou **en ce que** le braquage de la direction du véhicule automobile se trouve entre le demi-braquage de direction vers la gauche et le braquage maximum de la direction vers la gauche, notamment **en ce que** le braquage de la direction du véhicule automobile est maximum.

5. Dispositif pour mettre en oeuvre un procédé selon l'une des revendications précédentes, comprenant un contrôleur (12), un système capteur d'images (14) et un détecteur d'angle de direction (22), **caractérisé en ce que** le dispositif est configuré de telle sorte qu'il étalonne le système capteur d'images (14) en fonction de signaux d'image de l'objet d'étalonnage (26), le dispositif ayant stocké au moins une caractéristique géométrique de l'objet d'étalonnage (26).

6. Dispositif selon la revendication 5, **caractérisé en ce que** le dispositif est configuré de telle sorte que le dispositif étalonne initialement le système capteur d'images (14) et/ou surveille une perte d'étalonnage et/ou le réétalonne pendant l'utilisation du système capteur d'images (14) conformément à l'usage pour lequel il est conçu.

7. Dispositif selon la revendication 5 ou 6, **caractérisé en ce que** le dispositif est configuré de telle sorte que le dispositif étalonne initialement le système capteur d'images (14) et/ou surveille une perte d'étalonnage et/ou le réétalonne pendant l'utilisation du système capteur d'images (14) conformément à l'usage pour lequel il est conçu en fonction de l'état de chargement du véhicule automobile.

8. Dispositif selon l'une des revendications 5 à 7, **caractérisé en ce que** le dispositif est configuré de telle sorte que le dispositif étalonne le système capteur d'images (14) et/ou le réétalonne pendant l'utilisation du système capteur d'images (14) conformément à l'usage pour lequel il est conçu en fonction d'une régulation de la largeur d'éclairage des phares du véhicule automobile.

9. Dispositif selon l'une des revendications 5 à 8, **caractérisé en ce que** le dispositif comprend au moins une unité de saisie (18), l'unité de saisie (18) étant configurée de telle sorte qu'il est possible d'effectuer une identification d'au moins une partie de l'objet d'étalonnage (26) dans les signaux d'image du système capteur d'images (14).

10. Véhicule équipé d'un dispositif selon l'une des revendications 5 à 9.
